(19) Europäisches Patentamt
European Patent Office
Office européen des brevets

(11) **EP 3 387 636 B1**

(12) **EUROPÄISCHE PATENTSCHRIFT**

(45) Veröffentlichungstag und Bekanntmachung des Hinweises auf die Patenterteilung:
**12.02.2020  Patentblatt 2020/07**

(21) Anmeldenummer: **16809288.0**

(22) Anmeldetag: **07.12.2016**

(51) Int Cl.:
*G09C 1/00* (2006.01)　　　　*H04L 9/00* (2006.01)
*H04L 9/06* (2006.01)

(86) Internationale Anmeldenummer:
**PCT/EP2016/002064**

(87) Internationale Veröffentlichungsnummer:
**WO 2017/097418 (15.06.2017 Gazette 2017/24)**

(54) **KRYPTOALGORITHMUS MIT SCHLÜSSELABHÄNGIGEM MASKIERTEM RECHENSCHRITT (SBOX-AUFRUF)**

CRYPTOGRAPHIC ALGORITHM HAVING A KEY-DEPENDENT MASKED COMPUTING STEP (SBOX CALL)

ALGORITHME CRYPTOGRAPHIQUE COMPORTANT UNE ÉTAPE DE CALCUL MASQUÉE DÉPENDANT D'UNE CLÉ (APPEL DE SBOX)

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **08.12.2015  DE 102015015953**

(43) Veröffentlichungstag der Anmeldung:
**17.10.2018  Patentblatt 2018/42**

(73) Patentinhaber: **Giesecke+Devrient Mobile Security GmbH**
**81677 München (DE)**

(72) Erfinder:
• **BAUER, Sven**
**85591 Vaterstetten (DE)**
• **DREXLER, Hermann**
**80337 München (DE)**
• **PULKUS, Jürgen**
**80469 München (DE)**

(56) Entgegenhaltungen:
WO-A1-2010/146139　　　DE-A1-102004 032 893
DE-A1-102014 004 378

**Beschreibung**

Gebiet der Erfindung

Die Erfindung betrifft eine Prozessor-Einrichtung mit einer Implementierung eines kryptographischen Algorithmus wie zum Beispiel DES oder AES die einen schlüsselabhängigen maskierten Rechenschritt umfasst. Insbesondere betrifft die Erfindung das technische Gebiet des Schützens des Kryptoalgorithmus gegen Angriffe mittels White Box Kryptographie und eine Implementierung eines Kryptoalgorithmus in einer Darstellung, die an White Box Kryptographie angepasst ist.

Hintergrund der Erfindung

Unter einer Prozessor-Einrichtung im Sinn der Erfindung wird ein Gerät oder sonstiger Gegenstand mit einem Prozessor verstanden, beispielsweise ein mobiles Endgerät, wie z.B. ein Smartphone. Durch den kryptographischen Algorithmus verwendete sicherheitskritische Daten, z.B. PINs, Passwörter, kryptographische Schlüssel etc. werden gesichert für die Prozessor-Einrichtung bereitgestellt. Traditionell werden sicherheitskritische Daten, um sie vor einem Angriff durch unbefugte Person zu schützen, durch (Grey-Box-) Kryptographie gesichert. Hierzu werden die Daten auf einem Hardware-technisch eigenständigen Sicherheitselement des mobilen Endgeräts bereitgestellt, beispielsweise einer aus dem mobilen Endgerät herausnehmbaren SIM-Karte.

Aktuelle Prozessor-Einrichtungen haben verbreitet Flash-Speicher als Speicher für Applikationen und für kryptographische Algorithmen. Hierdurch lassen sich Applikationen und Algorithmen nachträglich verändern. Früher übliche EEPROM und ROM-Speicher werden zusehends verdrängt.

Ein alternativer Ansatz, der insbesondere auch für mobile Endgeräte anwendbar ist, die kein eigenständiges Sicherheitselement haben, basiert auf der White Box Kryptographie. Bei einer White Box Implementierung eines kryptographischen Algorithmus wird versucht, die sicherheitskritischen Daten, insbesondere geheime kryptographische Schlüssel, derart in der Implementierung zu verbergen, dass ein Angreifer, der vollen Zugriff auf die Implementierung hat, nicht dazu in der Lage ist, die sicherheitskritischen Daten aus der Implementierung zu extrahieren. Eine White Box Implementierung des AES-Kryptoalgorithmus (AES = Advanced Encryption Standard) ist beispielsweise aus der Veröffentlichung [1] "A Tutorial on White-box AES" von James A. Muir, Cryptology ePrint Archive, Report 2013/104 bekannt. Ebenso werden White Box Implementierungen von kryptographischen Algorithmen bzw. Routinen kommerziell vertrieben.

Eine ideale White Box Implementierung eines Krypto-Algorithmus hält sicherheitskritische Daten wie kryptographische Schlüssel so verborgen, dass sie durch einen Angriff nicht ermittelbar sind.

In der Patentanmeldung DE 102014016548.5 der Anmelderin der vorliegenden Patentanmeldung ist ein Verfahren zum Testen einer auf einem Prozessor ausführbaren White Box Implementierung, eines kryptographischen Algorithmus beschrieben, mit dem es den Erfindern gelungen ist, sicherheitskritische Daten durch einen Angriff zu ermitteln, was gemäß dem Konzept der White Box eigentlich nicht möglich sein sollte. Unter diesem Aspekt sind die getesteten White Box Implementierung auf Grund ihrer Angreifbarkeit definitionsgemäß nicht mehr perfekt White Box, werden aber auf Grund ihrer Zielsetzung perfekt zu sein nachfolgend weiterhin als White Box Implementierungen bezeichnet.

In der Fachveröffentlichung [3] "Differential Computation Analysis: Hiding your White-Box Designs is Not Enough", J.W. Bos, Ch. Hubain, W. Michiels, and Ph. Teuwen, eprint.iacr.org/2015/753, der Firma NXP ist ein ähnliches Testverfahren offenbart wie in der oben angeführten Patentanmeldung 102014016548.5, mit dem sich ebenfalls aus einer White Box Implementierung eines Kryptoalgorithmus der geheime Schlüssel mit statistischen Methoden ermitteln ließ.

Die Erfinder zur vorliegenden Anmeldung haben drei Konstruktionsvorschriften für eine Funktion f entwickelt, mit welcher Funktion f sich ein kryptographischer Algorithmus, insbesondere eine Block-Chiffre wie der Data Encryption Standard DES (oder auch AES), derart White Box maskieren lässt, dass der in der Patentanmeldung 102014016548.5 beschriebene Angriff verhindert oder zumindest stark erschwert ist. Das Grundprinzip dabei ist, Ausgabewerte von sicherheitskritischen Rechenschritten mit dazu statistisch unabhängigen Werten/Bits, sogenannten Verschleierungswerten/-bits y, zu verknüpfen. Statistisch unabhängig bedeutet dabei, dass die Ausgabewerte des Rechenschritts $S[x]$ bei zufällig variierendem Eingabewert x nicht oder nur wenig mit den Verschleierungswerten/-bits korrelieren. Diese Konstruktionsvorschriften werden in gesonderten Patentanmeldungen beschrieben. Die Konstruktionsvorschriften wurden zunächst auf Grundlage der Standard-Darstellung von Krypto-Algorithmen, insbesondere des Data Encryption Standard DES, entwickelt und stellten sich als speicherintensiv und umständlich zu verwirklichen heraus. In einer weiteren Anmeldung beschreiben die Erfinder eine alternative DES-Darstellung, an der sich die entwickelten Konstruktionsvorschriften für die Funktion f auf Krypto-Algorithmen, insbesondere den DES, einfacher anwenden lassen. Im Dokument [4] "A White-Box DES Implementation for DRM Applications", S. Chow, P. Eisen, H. Johnson, P.C. van Oorschot, pre-proceedings for ACM DRM-2002, Oct 15, 2002, haben die Autoren festgestellt, dass eine White Box Implementierung des DES fordernd ist (z.B. [4] Seite 2, Abs. 5) und eine alternative Darstellung des DES entwickelt, die sich einfacher zu einer White Box Implementierung ausbauen lässt.

Der DES hat mehrere Runden, und in verschiedenen Runden des DES werden in der Regel verschiedene Rundenschlüssel verwendet. Die beiden oben erwähnten alternativen DES-Darstellungen mit White Box Maskierungen benötigen somit für den schlüsselabhängigen Rechenschritt in der Regel in jeder Runde eine andere Tabelle. Somit enthalten die beiden alternativen DES-Darstellungen eine Vielzahl von schlüsselabhängigen Tabellen. Folglich haben diese alternativen DES-Darstellungen einen hohen Speicherbedarf. Ferner müssen bei jeder Schlüsselaktualisierung neue schlüsselabhängige Tabellen dem Kryptoalgorithmus zur Verfügung gestellt werden, beispielsweise von außen an die Prozessor-Einrichtung, in welcher der Algorithmus implementiert ist, übermittelt werden. Somit sind Schlüsselaktualisierungen kommunikations- und speicherintensiv.

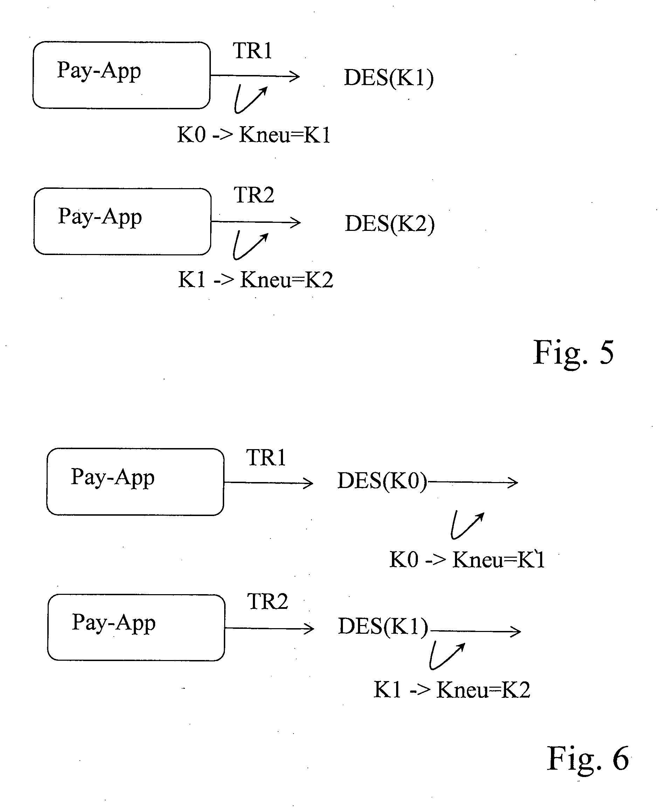

Das Dokument WO2010146139A9 offenbart eine White Box Implementierung für den AES, gemäß dem Oberbegriff von Anspruch 1, in dem Teilumfang von Anspruch 1, der auf den Algorithmus AES gerichtet ist. Dabei werden die beiden in einer Runde des AES vorkommenden Rechenschritte Sub-Bytes, worin eine S-Box-Operation enthalten ist, und AddRoundKey, worin der verwendete Schlüssel eingearbeitet wird, zu einem einzigen schlüsselabhängigen Rechenschritt kombiniert. Hierdurch wird der verwendete Schlüssel in der S-Box-Operation versteckt. Das Dokument WO2010146139A9 offenbart weiter schlüsselabhängige Rechenschritte, in denen XOR- und SBOX-Operation vereint sind, und die durch schlüsselabhängige Lookup-Tabellen (im Dokument auch T-Boxen T genannt) verwirklicht sind, und ein Verfahren zum Schlüssel-Update für solche schlüsselabhängige Lookup-Tabellen (T-Boxen). Die T-Boxen (Fig. 9: Boxen 920 + 930) liegen als mit Funktionen a White Box maskierte T-Boxen $Uk = a°Tk°a^{-1}$ vor, wobei k ein aktuell verwendeter Rundenschlüssel ist. Um zur Laufzeit des Algorithmus an der maskierten T-Box Uk ein Schlüssel-Update vom aktuellen Schlüssel k auf einen neuen Schlüssel k^ vorzunehmen, wird eine Schlüssel-Update-Information, genannt "Key substitute" (Fig. 6: Box 664; Fig. 9: Operation 990; Fig. 10a-c: Boxen 665, 666+667, 668), die gemäß t = a(k XOR k^) berechnet wird, über eine "key translation unit (Fig. 6: Box 620) auf Eingangsdaten für die maskierte T-Box Uk angewandt. Hierdurch wird zur Laufzeit des Algorithmus, bei der Durchführung eines Tabellenaufrufs in der maskierten T-Box U, eine Tabellenausgabe erzeugt, wie sie mit einer aktualisierten maskierten T-Box Uk^ mit dem neuen Schlüssel k^ erzeugt worden wäre. In der Implementierung bleibt hingegen die unveränderte, ursprüngliche, mit dem alten Schlüssel k erzeugte maskierte T-Box Uk erhalten. Hinzu kommen in der Implementierung die "key translation unit" und Speicherbereiche für die Schlüssel-Update-Information "Key substitute".

Nachteilig an der Lösung aus WO2010146139A9 ist, dass die zusätzlichen "key translation units" sowohl die Laufzeit als auch den Speicherbedarf der Implementierung erhöhen.

Ein weiterer Nachteil der Lösung aus WO2010146139A9 ist, dass die modifizierte Implementierung nun Information über den neuen wie auch den alten Schlüssel enthält. Es ist davon auszugehen, dass die nun vorliegende Information zu zwei unterschiedlichen Schlüsseln manche Angriffe auf White-Box Implementierungen erleichtern wird, z.B. über statistische Auswertung. In der Literatur werden White-Box-Implementierungen analysiert inwieweit sie für gewisse Angriffsklassen anfällig sind. Eine Modifikation einer White-Box Implementierung führt dazu, dass Ergebnisse von Analysen zu Angriffsklassen nicht mehr angewendet werden können, um das Sicherheitsniveau der nun modifizierten Implementierung einzuschätzen. Durch die zusätzlichen "key translation units" ist die White-Box Implementierung modifiziert. Eventuelle Angriffsklassen-Analysen müssen somit von Grund auf neu durchgeführt werden.

Der Erfindung liegt die Aufgabe zugrunde, eine Prozessor-Einrichtung mit einer Implementierung eines einen White Box maskierten schlüsselabhängigen Rechenschritt umfassenden kryptographischen Algorithmus, zum Beispiel DES oder AES, anzugeben, die eine speichersparende, kommunikationssparende, sichere und effiziente Schlüssel-Aktualisierung am schlüsselabhängigen Rechenschritt ermöglicht. Weiter soll die Implementierung bei einem Algorithmus mit mehreren Runden, der in verschiedenen Runden verschiedene Schlüssel verwendet, eine speicher- und kommunikationssparende Umsetzung des schlüsselabhängigen Rechenschritts für die mehreren Runden ermöglichen.

Zusammenfassung der Erfindung

Die Aufgabe wird durch eine Prozessor-Einrichtung nach Anspruch 1 gelöst. Ausführungsformen der Erfindung sind in den abhängigen Ansprüchen angegeben.

Die Prozessor-Einrichtung nach Anspruch 1 ist mit einer darauf implementierten ausführbaren Implementierung eines kryptographischen Algorithmus (z.B. AES oder DES) ausgestattet. Der Algorithmus ist eingerichtet, unter Verwendung eines geheimen Schlüssels K aus einem Eingabetext einen Ausgabetext zu erzeugen. Die Implementierung des Algorithmus umfasst einen maskierten schlüsselabhängigen Rechenschritt T', welcher eine Schlüssel-Verknüpfung von vom Eingangstext direkt oder indirekt abgeleiteten Eingabewerten x mit vom Schlüssel direkt oder indirekt abgeleiteten Schlüsselwerten SubK umfasst. Der maskierte schlüsselabhängige Rechenschritt T' ist in der Implementierung durch eine Tabelle dargestellt, welche mit einer Eingangsmaskierung und/ oder einer Ausgangsmaskierung zu einer maskierten Tabelle TabSsubK maskiert ist. Die Prozessor-Einrichtung umfasst weiter eine Schlüssel-Aktualisierungs-Einrichtung, die dazu eingerichtet ist, am maskierten schlüsselabhängigen Rechenschritt T' ein Schlüssel-Aktualisierungs-Verfahren vom abgeleiteten Schlüsselwert SubK auf einen neuen abgeleiteten Schlüsselwert SubKneu durchzuführen. Bei dem Schlüssel-Aktualisierungs-Verfahren werden weiter unter Verwendung des abgeleiteten Schlüsselwerts SubK, des neuen abgeleiteten Schlüsselwerts SubKneu und der verwendeten Eingangs- und/oder Ausgangsmaskierung berechnete Schlüsselwechseldaten an die Prozessor-Einrichtung, insbesondere an die Schlüssel-Aktualisierungs-Einrichtung, bereitgestellt.

Die Erfindung zeichnet sich dadurch aus, dass bei dem Schlüssel-Aktualisierungs-Verfahren weiter in der Prozessor-Einrichtung, insbesondere in der Schlüssel-Aktualisierungs-Einrichtung, mittels der Schlüsselwechseldaten eine neue maskierte Tabellen $TabS_{Kneu}$ generiert wird, die dazu eingerichtet ist, mittels der neuen maskierten Tabelle $TabS_{Kneu}$ den schlüsselabhängigen Rechenschritt S für den neuen abgeleiteten Schlüsselwert SubKneu zu berechnen. Die neuen maskierten Tabelle $TabS_{Kneu}$ wird in der Prozessor-Einrichtung implementiert, so dass später, zur Laufzeit des Algorithmus, in der Prozessor-Einrichtung die neue maskierte Tabelle $TabS_{Kneu}$ bereitsteht.

Die Schlüsselwechseldaten haben einen geringen Speicherbedarf im Vergleich zu einer vollständigen zweiten Tabelle für einen zweiten Schlüssel. Somit ist die Implementierung auf Grund der Verwendung der Schlüsselwechseldaten speichersparsam. Die Übertragung der Schlüsselwechseldaten an die Prozessor-Einrichtung bedeutet zudem ein geringes Volumen an zu kommunizierenden Daten.

Die ursprüngliche maskierte Tabelle $TabS_K$ wird nicht mehr benötigt und kann falls gewünscht sogar mit der neuen maskierten Tabelle $TabS_{Kneu}$ überspeichert werden. Hierdurch lässt sich weiterer Speicherplatz einsparen. Zudem wird, falls die neue maskierte Tabelle $TabS_{Kneu}$ auf die ursprüngliche maskierte Tabelle überspeichert wird, jegliche Information über den ursprünglichen Schlüssel aus der Implementierung entfernt. In der Implementierung verbleibende Information ist durchgängig Information zum neuen Schlüssel. Hierdurch ist eventuellen statistischen und ähnlichen Angriffen vorgebeugt und die Sicherheit erhöht.

Die Implementierung an sich bleibt durch die Schlüssel-Aktualisierung unverändert, da lediglich eine alte Tabelle $TabS_K$ durch eine neue, strukturell identische Tabelle $TabS_{Kneu}$ ersetzt wird. Analysen zu Angriffsklassen, die an einer Prozessor-Einrichtung ohne Schlüssel-Aktualisierungs-Einrichtung durchgeführt wurden, können bei der Prozessor-Einrichtung mit der erfindungsgemäßen Schlüssel-Aktualisierungs-Einrichtung daher wiederverwendet werden. Insbesondere enthält die Implementierung keine zusätzlichen implementierten Operationen wie beispielsweise die in der Lösung aus WO2010146139A9 erforderliche "key translation unit". Hierdurch bleibt die Performanz (Ausführungsgeschwindigkeit, Rechengeschwindigkeit) der Implementierung zur Laufzeit des Algorithmus erhalten und wird insbesondere nicht erhöht. Weiter wird die erfindungsgemäße Schlüssel-Aktualisierung bereits vor der Laufzeit des Algorithmus durchgeführt, und zwar in der Phase, nachdem die Applikation, die den Algorithmus nutzt, die Schlüsselwechseldaten erhalten hat. Zur Laufzeit, wenn der Algorithmus ausgeführt wird, muss lediglich ein schlüsselabhängiger Tabellenaufruf an der neuen maskierten Tabelle $TabS_{Kneu}$ durchgeführt werden. Diese Effekte steigern die Effizienz der Implementierung. Dies ist speziell für Applikationen wichtig bei denen die Ausführung des Algorithmus in eine kontaktlose Datenübertragung eingebunden ist, da hierbei sehr kurze Transaktionszeiten gewünscht sind. Als typisches Beispiel seien hier Zahlungsapplikationen auf Mobiltelefonen genannt, die über ein NFC-Interface (near field communication) an das Zahlungsterminal angebunden sind.

Daher ist gemäß Anspruch 1 eine Prozessor-Einrichtung mit einer Implementierung eines einen White Box maskierten schlüsselabhängigen Rechenschritt umfassenden kryptographischen Algorithmus, zum Beispiel DES oder AES, geschaffen, die eine speichersparende, kommunikationssparende, sichere und effiziente Schlüssel-Aktualisierung am schlüsselabhängigen Rechenschritt ermöglicht.

Wahlweise umfasst die Prozessor-Einrichtung eine änderbare Speichereinrichtung, insbesondere Flash-Speicher, worin die Implementierung eingerichtet ist.

Die Schlüsselwechseldaten haben vorzugsweise einen geringeren Speicherbedarf als die maskierte Tabelle.

Wahlweise umfasst der Algorithmus mehrere Runden j = 1,..., n. Als abgeleiteter Schlüsselwert SubK ist dabei ein durch den maskierten schlüsselabhängigen Rechenschritt T' verarbeiteter Rundenschlüssel-Teil eines Rundenschlüssels kj einer Runde j vorgesehen. Als neuer abgeleiteter Schlüsselwert SubKneu ist ein durch den maskierten schlüsselabhängigen Rechenschritt T' verarbeiteter Rundenschlüssel-Teil eines Rundenschlüssel einer anderen Runde 1, insbesondere einer der Runde nachfolgenden Runde j+1 vorgesehen. Hierdurch wird mittels der Schlüsselwechseldaten aus der maskierten Tabelle $TabS_K$ der Runde die neue maskierte Tabelle $TabS_{Kneu}$ einer anderen Runde, insbesondere der nachfolgenden Runde, abgeleitet. Dieses Verfahren hat den Vorteil, dass man aus einer Tabelle $TabS_K$ mehrere Tabellen $TabS_{Kneu}$ mit unterschiedlichen Rundenschlüssel-Teilen $K_{neu}$ ableiten kann. Man kann damit jederzeit aus einer abgespeicherten Tabelle Tabellen anderer Runden generieren und damit Speicherplatz sparen. Nachteilig ist, dass die neu generierten Tabellen dieselbe Maskierung wie die Originaltabelle haben und damit durch dieses Verfahren die Sicherheit der Implementierung reduziert wird.

Wahlweise umfasst der Algorithmus eine Vielzahl von n, insbesondere 10 (AES) oder 16 (DES), Runden, wobei für einen Teil der Runden die jeweilige neue maskierte Tabelle $TabS_{Kneu}$ unter Verwendung von Schlüsselwechseldaten aus der jeweiligen maskierten Tabelle $TabS_K$ einer anderen Runde, insbesondere einer der Runde vorangehenden Runde, abgeleitet wird. Insbesondere lässt sich so von Runde zu Runde, durch den ganzen Algorithmus hindurch, die neue maskierte Tabelle $TabS_{Kneu}$ für den Rundenschlüssel der neuen Runde aus der maskierten Tabelle $TabS_K$ der jeweiligen vorangehenden Runde berechnen.

Wahlweise ist die Prozessor-Einrichtung dazu eingerichtet, zur Laufzeit, während der Algorithmus auf der Prozessor-Einrichtung ausgeführt wird, für den Rechenschritt S zwei oder mehrere Tabellen bereitzustellen, welche mit zwei oder mehreren unterschiedlichen Eingangsmaskierungen und/ oder Ausgangsmaskierungen zu maskierten Tabellen $Tab1S_{SubK}$, $Tab2S_{SubK}$, $Tab3S_{SubK}$, ... maskiert sind, wobei die den neuen Schlüssel $SubK_{neu}$ enthaltende neue maskierte Tabelle $TabS_{Kneu}$ aus einer der maskierten Tabellen $Tab1S_{SubK}$, $Tab2S_{SubK}$, $Tab3S_{SubK}$, ... generiert wird. Hierdurch wird der Effekt erzielt, dass unterschiedliche Maskierungen zur Anwendung zur Verfügung stehen. Dieser Effekt erhöht die Sicherheit im Vergleich zu einem Verfahren bei dem nur eine Tabelle $Tab1S_{SubK}$ verwendet wird, aber auch den Speicherbedarf.

Wahlweise umfasst der Algorithmus mehrere Runden, und die neuen maskierten Tabellen $TabS_{Kneu}$ unterschiedlicher Runden werden zumindest manche oder alle aus unterschiedlichen der maskierten Tabellen $Tab1S_{SubK}$, $Tab2S_{SsubK}$, $Tab3S_{SubK}$, ... generiert. Hierdurch wird der Effekt erzielt, dass unterschiedliche Runden mit unterschiedlichen Maskierungen maskiert sind. Dieser Effekt erhöht die Sicherheit, aber leider auch den Speicherbedarf.

Die Prozessor-Einrichtung umfasst wahlweise weiter eine in der Prozessor-Einrichtung implementierte Transaktions-Applikation, die eingerichtet ist, unter Verwendung der erfindungsgemäßen implementierten Implementierung des Algorithmus eine Transaktion zu veranlassen. Als Transaktion kann insbesondere eine der eingangs beschriebenen Transaktionen wie z.B. Zahlungsverkehrs-Transaktion etc. vorgesehen sein.

Bei einem erfindungsgemäßen Verfahren zum Wechsel des geheimen Schlüssels K in einer erfindungsgemäßen Prozessor-Einrichtung wird ein Schlüsselwechsel von einem alten Schlüssel Ka zu einem neuen Schlüssel Kn durchgeführt. Der Wechsel des Schlüssels K vom alten Schlüssel Ka zum neuen Schlüssel Kn wird dadurch durchgeführt, dass für alle in der Implementierung vorgesehenen Tabellen, bezeichnet als alte $TabS_{SubKa}$, neue Tabellen $TabS_{SubKn}$ generiert werden und die alten Tabellen $TabS_{SubKa}$ durch die neuen Tabellen $TabS_{SubKn}$ ersetzt werden. Die neuen Tabellen $TabS_{SubKn}$ werden aus den alten Tabellen TabSsubKa mittels Schlüsselwechseldaten generiert. Die Schlüsselwechseldaten werden unter Verwendung von vom alten Schlüssel Ka abgeleiteten Schlüsselwerten SubKa, von vom neuen Schlüssel Kn abgeleiteten Schlüsselwerten SubKn und der verwendeten Eingangs- und / oder Ausgangsmaskierung berechnet.

Wahlweise wird der Wechsel des geheimen Schlüssels vom alten Schlüssel Ka zum neuen Schlüssel Kn, insbesondere das Generieren der neue Tabellen $TabS_{SubKn}$, auf Veranlassung der Applikation durchgeführt. Mit anderen Worten kann die Applikation selbst ein Schlüssel-Update anstoßen.

Wahlweise ist die Applikation als Applikation zur Durchführung einer Transaktion, insbesondere einer Zahlungsverkehrs-Transaktion, insbesondere einer Cloud-Payment-Transaktion, gestaltet, und wobei der Wechsel des geheimen Schlüssels von einem alten Schlüssel auf einen neuen Schlüssel anlässlich jedes Durchführens einer Transaktion durchgeführt wird.

Insbesondere kann vorgesehen sein, dass durch eine Transaktions-Applikation die Durchführung einer Transaktion angestoßen wird und auf Veranlassung der Transaktions-Applikation, insbesondere direkt bewirkt durch das Anstoßens einer Durchführung einer Transaktion, automatisch eine Schlüssel-Aktualisierung angestoßen wird. Hierdurch ist sichergestellt, dass für jede einzelne Durchführung einer Transaktion, die unter Leitung der Transaktions-Applikation - insbesondere Cloud-Payment-Transaktion - erfolgt, ein neuer Schlüssel verwendet wird.

Beim Anwendungsfall der (Cloud-Payment)-Transaktions-Applikation, die selbst die Schlüssel-Aktualisierung vor jeder einzelnen Durchführung einer Transaktion anstößt, kann, wenn die Applikation die Schlüssel-Aktualisierung für die aktuelle Transaktion anstößt, einer der Vorteile der Erfindung leider nicht vollständig ausgenutzt werden, nämlich die Ersparnis an Rechenzeit zur Laufzeit. Wenn durch die Transaktions-Applikation eine (Zahlungs-)Transaktion angestoßen wird, wird auch der Algorithmus zur Ausführung gebracht. Gemäß der Erfindung wird dabei zunächst die im Algorithmus noch vorhandene maskierte Tabelle, die einen Schlüssel enthält, durch eine neue maskierte Tabelle ersetzt, die einen neuen Schlüssel enthält. Anschließend wird der Algorithmus ausgeführt und dabei ein Tabellenaufruf in der neuen Tabelle durchgeführt. Bei diesem Anwendungsfall schlägt sich somit der volle Zeitaufwand für die Tabellen-Aktualisierung bzw. Schlüssel-Aktualisierung auf die Transaktionsdauer nieder, d.h. auf die Zeitdauer, die zur Durchführung der Transaktion benötigt wird. Die Sicherheitsvorteile bleiben allerdings bestehen.

Gemäß einer weiteren Ausführungsform der Erfindung stößt die Applikation die Schlüssel-Aktualisierung nach Durchführung oder zumindest nach Veranlassen der Transaktion an. In diesem Fall wird nach der Transaktion die neue, auf dem neuen Schlüssel beruhende maskierte Tabelle implementiert, so dass für die nächste Transaktion die neue, d.h. aktualisierte, maskierte schlüsselabhängige Tabelle bereitsteht. Die Laufzeitvorteile werden bei dieser Ausführungsform erhalten.

Bei wieder anderen Anwendungsfällen wird die maskierte Tabelle, und damit der Schlüssel, vorab aktualisiert, so dass sich die Zeitdauer für die Tabellen-Aktualisierung nicht auf die Transaktionszeit niederschlägt.

Auch generell kann der Wechsel des geheimen Schlüssels von einem alten Schlüssel auf einen neuen Schlüssel nach einem Durchführen einer Transaktion mit dem alten Schlüssel ka durchgeführt werden, so dass für die nachfolgende Transaktion die neue Tabelle $TabS_{SubKn}$ mit dem neuen Schlüssel implementiert ist. Die Transaktionszeit, welche eine Transaktion in Anspruch nehmen darf, ist in vielen Anwendungsfällen zeitlich begrenzt, speziell bei Kontaktlos-Transaktionen wie z.B. NFC-Transaktionen. Indem das zeitaufwändige Erstellen der neuen Tabelle auf nach der Transaktion verlagert wird, in Vorausarbeit für die nachfolgende Transaktion, wird die Transaktionszeit der jeweils aktuellen Transaktion kurz gehalten.

Kurze Beschreibung der Zeichnungen

Im Folgenden wird die Erfindung an Hand von Ausführungsbeispielen und unter Bezugnahme auf die Zeichnungen näher erläutert, in der zeigen:

Fig. 1    eine DES-Runde in Standard-Darstellung, nach dem Stand der Technik, gemäß dem Stand der Technik;
Fig. 2    eine DES-Runde in einer alternativen Darstellung, mit in Operationen T eingebetteten S-Box-Operationen S, und speziell geeignet als Grundlage der Erfindung;
Fig. 3    eine Detaildarstellung einer einzelnen Operation T in der DES-Runde aus Fig. 2;
Fig. 4    eine White Box Maskierung einer DES-Runde nach Fig. 2 und Fig. 3, gemäß Ausführungsformen der Erfindung;
Fig. 5    zwei Durchführungen einer Zahlungsverkehrs-Transaktion unter Leitung einer Transaktions-Applikation, gemäß einer ersten Ausführungsform der Erfindung;
Fig. 6    zwei Durchführungen einer Zahlungsverkehrs-Transaktion unter Leitung einer Transaktions-Applikation, gemäß einer zweiten Ausführungsform der Erfindung.

Detaillierte Beschreibung von Ausführungsbeispielen

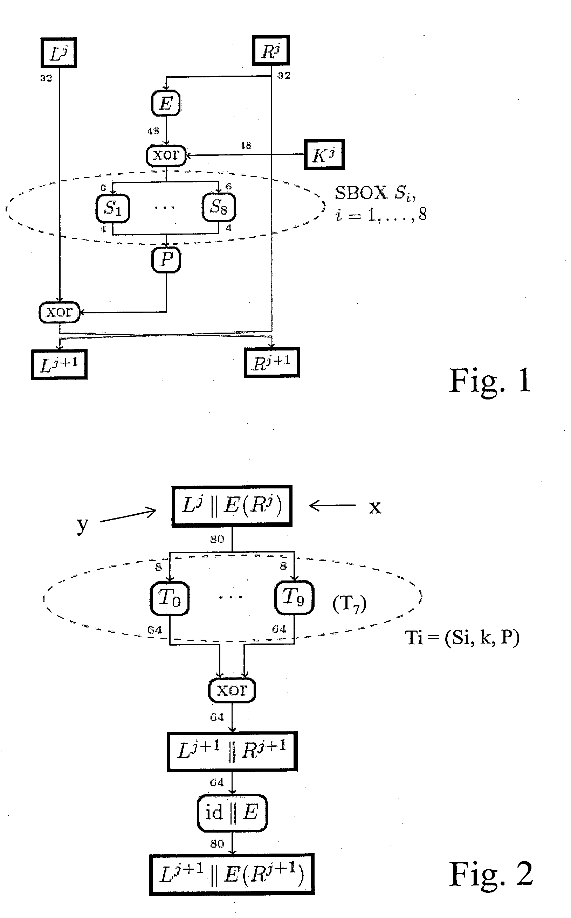

Fig. 1 zeigt eine DES-Runde nach dem Stand der Technik. Die DES-Runde umfasst insbesondere ach SBOX-Operationen S1, ... S8, durch welche Eingabewerte x = e XOR k verarbeitet werden, wobei k= Kj vom geheimen Schlüssel K abgeleitete Schlüsselwerte sind, und zwar Rundenschlüssel kj der betrachteten DES-Runde.
Fig. 2 zeigt eine DES-Runde in einer alternativen Darstellung, mit in Operationen oder sogenannte T-Boxen T, T = T0, ... T9 (oder T0, ... T7) eingebetteten S-Box-Operationen S, und speziell geeignet als Grundlage der Erfindung. Die Runde j verarbeitet eine 48 Bit langen Rundenschlüssel kj. Der Rundenschlüssel kj wird in 6 Bit lange Rundenschlüssel-Teile SubK aufgeteilt. Je ein Rundenschlüssel-Teil SubK wird durch eine der T-Boxen T = T0, ... T7 verarbeitet. Zwei weitere T-Boxen verarbeiten schlüsselfreie Werte. Genauer ist für Ti der Runde j SubK = kj6i ... kj6i+5, wobei i=0 ... 7, d.h. in T6 der 5. Runde gehen die 6 Bits k(j=5,i=36) bis k(j=5,i=41) ein etc..

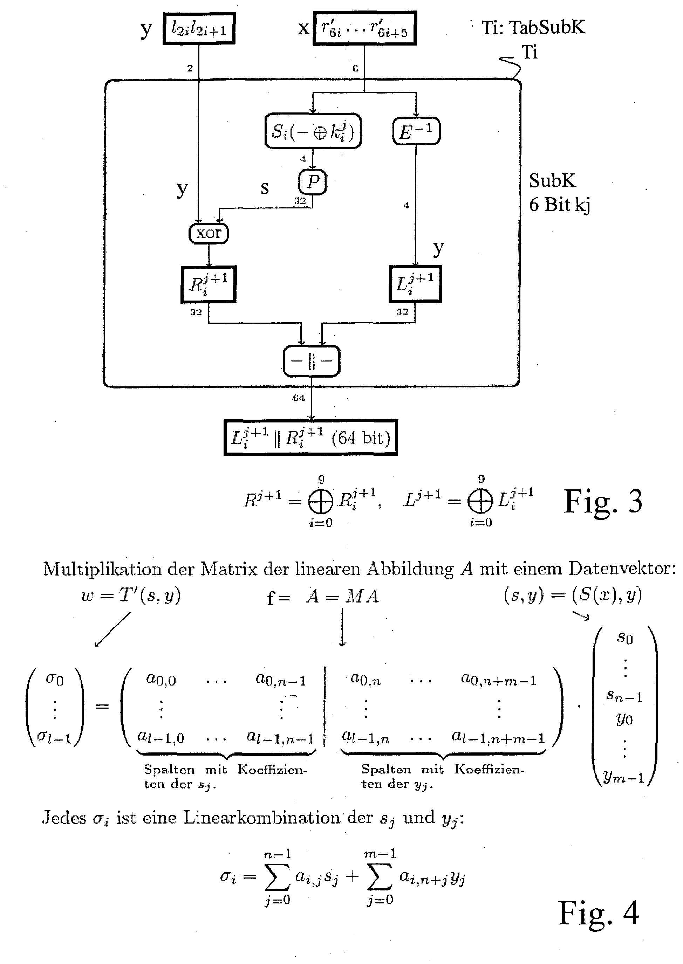

Fig. 3 zeigt eine Detaildarstellung einer einzelnen Operation Ti in der DES-Runde aus Fig. 2 (wobei i ein Wert aus 0, ... 9 bzw. aus 0, ...7 ist). Ti ist als schlüsselabhängiger Rechenschritt implementiert, der die SBOX-Operation umfasst. Dabei hängt der schlüsselabhängiger Rechenschritt Ti von 6 Bits des Rundenschlüssels kj, im Folgenden als SubK bezeichnet, ab. Der schlüsselabhängige Rechenschritt Ti ist für die jeweilige DES-Runde als schlüsselabhängige Tabelle $TabS_{SubK}$ implementiert.
Fig. 4 zeigt eine White Box Maskierung einer DES-Runde nach Fig. 2 und Fig. 3, gemäß Ausführungsformen der Erfindung. Der Ausgang jeder schlüsselabhängigen Rechenoperation Ti, ist mit einer invertierbaren Abbildung f, die gemäß Fig. 4 beispielsweise durch eine lineare Abbildung A gebildet ist, die wiederum durch eine Matrix MA dargestellt ist, maskiert zu einer maskierten schlüsselabhängigen Rechenoperation T'i. In Fig. 4 gilt also für die Maskierungs-Operation f = A = MA. Hier sind die Ausgangsbits der Rechenoperation Ti mit s0 ... sn-1, y0, ... ym-1 bezeichnet.
Der DES umfasst 16 Runden. In jeder der 16 DES-Runden werden bekanntlich neue Rundenschlüssel kj abgeleitet und verwendet. Herkömmlicherweise müssten für die Ausführungsform aus Fig. 2-4 für die maskierten schlüsselabhängigen Rechenoperationen T'i, die SBOX-Operationen Si umfassen, der 16 DES-Runden 16 separat bereitgestellte schlüsselabhängige Rechenoperationen T'i bereitgestellt werden.
Gemäß der Erfindung können die maskierten schlüsselabhängigen Rechenoperationen T'i einer DES-Runde mittels Schlüsselwechseldaten aus der jeweils vorherigen DES-Runde abgeleitet werden. In diesem Fall müssen nur maskierten schlüsselabhängigen Rechenoperationen T'i und damit schlüsselabhängige Tabellen TabSsubK für eine einzelne Runde gespeichert werden. Die schlüsselabhängigen Tabellen $TabS_{SubK}$ der weiteren Runden werden mittels Schlüsselwechseldaten ausgehend von der gespeicherten schlüsselabhängigen Tabelle $TabS_{SubK}$ sukzessive berechnet. Statt aus der direkt vorangehenden DES-Runde können die Rundenschlüssel einer DES-Runde mittels der geeignet berechneten Schlüsselwechseldaten aus irgend einer anderen DES-Runde abgeleitet werden, die nicht notwendigerweise die vorangehende Runde ist.
Weiter kann mittels der erfindungsgemäßen Technik der Schlüsselwechseldaten ein Schlüsselwechsel von einem alten Schlüssel Ka zu einem neuen Schlüssel Kn am gesamten DES-Algorithmus vergleichsweise einfach durchgeführt werden. Hierzu werden für alle 16 DES-Runden die schlüsselabhängigen Tabellen $TabS_{SubKa}$, die zu Anfang von Rundenschlüsseln SubKa abhängen, die ausgehend vom alten DES-Schlüssel Ka gebildet sind, durch neue schlüsselabhängige Tabellen TabS$_{SubKn}$ ersetzt, die von Rundenschlüsseln SubKn abhängen, die ausgehend vom neuen DES-Schlüssel Kn gebildet sind.

Nachfolgend werden Schlüsselwechsel mittels Schlüsselwechseldaten anhand von zwei Beispielen aufgezeigt.

Beispiel 1: Der Eingang des Rechenschritts S ist mit einem abgeleiteten Schlüsselwert k belegt, f und g-1 sind lineare Funktionen.

Sk: Rechenschritt, mit abgeleitetem Schlüsselwert=k
x: Eingabewert
k: Schlüsselwert der in Rechenschritt S eingeht
SBOX: SBOX -Tabellenaufruf in Tabelle SBOX

$$Sk(x) = SBOX(k\ XOR\ x)$$

Lineare Verschleierung von Ein- und Ausgang der Tabelle SBOX mit linearen Abbildungen g-1 und f.

$$TabS_{SubK}(x) = f\ SBOX(k\ XOR\ g\text{-}1(x))$$

Schlüsselwechseldaten: SWD = g (kneu XOR k) werden auf Eingang verXORt.

Daraus ergibt sich:

$$TabS_{SubKneu}(x) = f\ SBOX(kneu\ XOR\ g\text{-}1(x)) = f\ SBOX(k\ XOR\ g\text{-}1(g(k\ XOR$$
$$kneu))\ XOR\ g\text{-}1(x)) = f\ SBOX(k\ XOR\ g\text{-}1(g(k\ XOR\ kneu)\ XOR\ x) = f\ SBOX(k$$
$$XOR\ g\text{-}1(SWD\ XOR\ x))$$

Beispiel 2: Der Ausgang des Rechenschritts S ist mit einem abgeleiteten Schlüsselwert k belegt, f und g-1 sind lineare Funktionen.

Sk: Rechenschritt, falls Schlüsselwert=k
x: Eingabewert
k: Schlüsselwert der in Rechenschritt S eingeht
SBOX: SBOX -Tabellenaufruf

$$Sk(x) = k\ XOR\ SBOX(x)$$

Lineare Verschleierung von Ein- und Ausgang mit linearen Abbildungen g-1 und f.

$$TabS_{SubK}(x) = S'k(y) = f\ (k\ XOR\ SBOX(g\text{-}1\ x)),\ mit\ y = g\text{-}1\ x$$

Schlüsselwechseldaten: SWD = f (kneu XOR k) werden auf Ausgang verXORt.

Daraus ergibt sich:

$$TabS_{SubKneu}(x) = S'kneu(y) = SWD\ XOR\ f\ (k\ XOR\ SBOX(g\text{-}1\ x)) =$$

$$f\ (kneu\ XOR\ k)\ XOR\ f\ (k\ XOR\ SBOX(g\text{-}1\ x))\ =$$

$$f\ (kneu\ XORk\ XOR\ k\ XOR\ SBOX\ (g\text{-}1\ x)) =$$

$$f\ (kneu\ XOR\ SBOX\ (g\text{-}1\ x)).$$

In den Beispielen 1 und 2 wurde zunächst vom einfachsten Fall ausgegangen, dass g-1 und f lineare Abbildungen sind. Falls g-1 und f nicht-linear sind, werden noch zusätzliche Hilfsdaten benötigt, um S'kneu(y) zu berechnen. Bei anderen Konstruktionen von Sk(x), genauer wenn sowohl der Eingang als auch der Ausgang des Rechenschritts (der SBOX) von einem Schlüsselwechsel betroffen sind, muss man beim Wechsel des Schlüsselwerts k sowohl Eingang als auch Ausgang modifizieren.

Fig. 5 zeigt, gemäß einer ersten Ausführungsform der Erfindung, in schematischer Darstellung zwei Durchführungen TR1, TR2 einer Zahlungsverkehrs-Transaktion unter Leitung einer Transaktions-Applikation Pay-App, die einen erfindungsgemäßen DES nutzt. Der DES ist zunächst mit einem Schlüssel K0 implementiert, mit einer maskierten Tabelle maskierten Tabelle $TabS_{SubK0}$. Sobald die Applikation Pay-App eine Transaktion TR1 anstößt, wird eine Aktualisierung des Schlüssels K0 auf einen neuen Schlüssel K1 angestoßen. Anschließend wird die Transaktion TR1 mit dem neuen Schlüssel K1 durchgeführt. Hierbei wird ein DES mit dem neuen Schlüssel K1 durchgeführt, mit einem Tabellenaufruf in der maskierten Tabelle $TabS_{SubK1}$. Der DES ist nun mit einem Schlüssel K1 implementiert, mit einer maskierten Tabelle $TabS_{SubK1}$. Sobald die Applikation Pay-App eine nachfolgende Transaktion TR2 anstößt, wird eine Aktualisierung des Schlüssels K1 auf einen neuen Schlüssel K2 angestoßen. Anschließend wird die Transaktion TR2 mit dem neuen Schlüssel K2 durchgeführt. Hierbei wird ein DES mit dem neuen Schlüssel K2 durchgeführt, mit einem Tabellenaufruf in der maskierten Tabelle $TabS_{SubK2}$.

Fig. 6 zeigt in schematischer Darstellung zwei Durchführungen einer Zahlungsverkehrs-Transaktion TR1, TR2 unter Leitung einer Transaktions-Applikation, gemäß einer zweiten Ausführungsform der Erfindung. Die Transaktion erfolgt auch hier unter Leitung einer Transaktions-Applikation Pay-App, die einen erfindungsgemäßen DES nutzt. Der DES ist zunächst mit einem Schlüssel K0 implementiert, mit einer maskierten Tabelle maskierten Tabelle $TabS_{SubK0}$. Sobald die Applikation Pay-App eine Transaktion TR1 anstößt, wird die Transaktion TR1 mit dem implementierten Schlüssel K0 durchgeführt. Anschließend wird eine Aktualisierung des Schlüssels K0 auf einen neuen Schlüssel K1 angestoßen, unter Umständen ohne Eingriffsmöglichkeit des Nutzers. Sobald die Applikation Pay-App eine nachfolgende Transaktion TR2 anstößt, wird die Transaktion TR2 mit dem im Anschluss an die vorangehende Transaktion aktualisierten neuen Schlüssel K1 durchgeführt. Hierbei wird ein DES mit dem neuen Schlüssel K1 durchgeführt, mit einem Tabellenaufruf in der maskierten Tabelle $TabS_{SubK1}$. Anschließend wird eine Aktualisierung des Schlüssels K1 auf einen neuen Schlüssel K2 angestoßen. Eine nachfolgende dritte Transaktion TR3 würde nun einen Tabellenaufruf auf eine maskierte Tabelle $TabS_{SubK2}$ umfassen, die auf dem Schlüssel K2 aufbaut. Zwischen den einzelnen Transaktionen TR1, TR2, ... können längere Zeiträume verstreichen, in denen die Prozessor-Einrichtung bzw. das Gerät, in welchem die Prozessor-Einrichtung verbaut ist, auch ausgeschaltet sein kann.

Zitierter Stand der Technik

[1] "A Tutorial on White-box AES", James A. Muir, Cryptology ePrint Archive, Report 2013/104, eprint.iacr.org/2013/104
[2] DE 102014016548.5 (eingereicht am 10.11.2014)
[3] "Differential Computation Analysis: Hiding your White-Box Designs is Not Enough", J.W. Bos, Ch. Hubain, W. Michiels, and Ph. Teuwen, eprint.iacr.org/2015/753, abgerufen am 31.7.2015
[4] "A White-Box DES Implementation for DRM Applications", S. Chow, P. Eisen, H. Johnson, P.C. van Oorschot, pre-proceedings for ACM DRM-2002, Oct 15, 2002, https://crypto.stanford.edu/DRM2002/whitebox.pdf
[5] WO2010146139A9

**Patentansprüche**

1.   Prozessor-Einrichtung mit einer darauf implementierten ausführbaren Implementierung eines kryptographischen Algorithmus (AES, DES), der eingerichtet ist, unter Verwendung eines geheimen Schlüssels K aus einem Eingabetext einen Ausgabetext zu erzeugen, wobei die Implementierung des Algorithmus:

- einen maskierten schlüsselabhängigen Rechenschritt T' umfasst, welcher eine Schlüssel-Verknüpfung von vom Eingangstext direkt oder indirekt abgeleiteten Eingabewerten x mit vom Schlüssel direkt oder indirekt abgeleiteten Schlüsselwerten SubK umfasst;
- der maskierte schlüsselabhängige Rechenschritt T' durch eine Tabelle dargestellt ist, welche mit einer Eingangsmaskierung und/oder einer Ausgangsmaskierung zu einer maskierten Tabelle TabSsubK maskiert ist;
- die Prozessor-Einrichtung eine Schlüssel-Aktualisierungs-Einrichtung umfasst, die dazu eingerichtet ist, am maskierten schlüsselabhängigen Rechenschritt T' ein Schlüssel-Aktualisierüngs-Verfahren vom abgeleiteten Schlüsselwert SubK auf einen neuen abgeleiteten Schlüsselwert SubKneu durchzuführen; und
- wobei bei dem Schlüssel-Aktualisierungs-Verfahren unter Verwendung des abgeleiteten Schlüsselwerts SubK, des neuen abgeleiteten Schlüsselwerts SubKneu und der verwendeten Eingangs- und/ oder Ausgangsmaskierung berechnete Schlüsselwechseldaten (SWD) an die Prozessor-Einrichtung, insbesondere an die Schlüssel-Aktualisierungs-Einrichtung, bereitgestellt werden; **dadurch gekennzeichnet, dass:**

- bei dem Schlüssel-Aktualisierungs-Verfahren weiter in der Prozessor-Einrichtung, insbesondere in der Schlüssel-Aktualisierungs-Einrichtung, mittels der Schlüsselwechseldaten (SWD) eine neue maskierte Tabelle $TabS_{Kneu}$ generiert wird, die dazu eingerichtet ist, mittels der neuen maskierten Tabelle $TabS_{Kneu}$ den schlüsselabhängigen Rechenschritt S für den neuen abgeleiteten Schlüsselwert SubKneu zu berechnen.

2. Prozessor-Einrichtung nach Anspruch 1, wobei die Schlüsselwechseldaten (SWD) einen geringeren Speicherbedarf haben als die maskierte Tabelle ($TabS_K$, $TabS_{Kneu}$).

3. Prozessor-Einrichtung nach Anspruch 1 oder 2, wobei

- der Algorithmus mehrere Runden j = 1,..., n umfasst,
- als abgeleiteter Schlüsselwert SubK ein durch den maskierten schlüsselabhängigen Rechenschritt T' verarbeiteter Rundenschlüssel-Teil eines Rundenschlüssels kj einer Runde j vorgesehen ist, und
- als neuer abgeleiteter Schlüsselwert SubKneu ein durch den maskierten schlüsselabhängigen Rechenschritt T' verarbeiteter Rundenschlüssel-Teil eines Rundenschlüssel einer anderen Runde 1, insbesondere einer der Runde nachfolgenden Runde j+1 vorgesehen ist,

so dass mittels der Schlüsselwechseldaten aus der maskierten Tabelle $TabS_K$ der Runde die neue maskierte Tabelle $TabS_{Kneu}$ einer anderen Runde, insbesondere der nachfolgenden Runde, abgeleitet wird.

4. Prozessor-Einrichtung nach Anspruch 3, umfassend eine Vielzahl von n, insbesondere 10 (AES) oder 16 (DES), Runden, wobei für einen Teil der Runden die jeweilige neue maskierte Tabelle $TabS_{Kneu}$ unter Verwendung von Schlüsselwechseldaten (SWD) aus der jeweiligen maskierten Tabelle $TabS_K$ einer anderen Runde, insbesondere einer der Runde vorangehenden Runde, abgeleitet wird.

5. Prozessor-Einrichtung nach einem der Ansprüche 1 bis 4, wobei die Prozessor-Einrichtung dazu eingerichtet ist, zur Laufzeit, während der Algorithmus auf der Prozessor-Einrichtung ausgeführt wird, für den Rechenschritt S zwei oder mehrere Tabellen bereitzustellen, welche mit zwei oder mehreren unterschiedlichen Eingangsmaskierungen und/oder Ausgangsmaskierungen zu maskierten Tabellen $Tab1S_{SubK}$, $Tab2S_{SubK}$, Tab3SsubK, ... maskiert sind, wobei die neue maskierte Tabelle $TabS_{Kneu}$ aus einer der maskierten Tabellen $Tab1S_{SubK}$, $Tab2S_{SubK}$, $Tab3S_{SubK}$, ... generiert wird.

6. Prozessor-Einrichtung nach Anspruch 5, wobei

- der Algorithmus mehrere Runden umfasst, und
- die neuen maskierten Tabellen $TabS_{Kneu}$ unterschiedlicher Runden zumindest manche oder alle aus unterschiedlichen der maskierten Tabellen $Tab1S_{SubK}$, $Tab2S_{SubK}$, $Tab3S_{SubK}$, ... generiert werden.

7. Prozessor-Einrichtung nach einem der Ansprüche 1 bis 6, weiter umfassend eine in der Prozessor-Einrichtung implementierte Transaktions-Applikation (Pay-App), die eingerichtet ist, unter Verwendung der nach einem der Ansprüche 1 bis 6 implementierten Implementierung des Algorithmus eine Transaktion (TR1, TR2, ...) zu veranlassen.

8. Verfahren zum Wechsel des geheimen Schlüssels K in einer Prozessor-Einrichtung nach einem der Ansprüche 1 bis 7, von einem alten Schlüssel Ka zu einem neuen Schlüssel Kn,

- wobei der Wechsel des Schlüssels K vom alten Schlüssel Ka zum neuen Schlüssel Kn dadurch durchgeführt wird, dass für alle in der Implementierung vorgesehenen Tabellen, bezeichnet als alte $TabS_{SubKa}$, neue Tabellen $TabS_{SubKn}$ generiert werden und die alten Tabellen $TabS_{SubKa}$ durch die neuen Tabellen $TabS_{SubKn}$ ersetzt werden,
- wobei die neuen Tabellen $TabS_{SubKn}$ aus den alten Tabellen TabSsubKa mittels Schlüsselwechseldaten (SWD) generiert werden,
- wobei die Schlüsselwechseldaten (SWD) unter Verwendung von vom alten Schlüssel Ka abgeleiteten Schlüsselwerten SubKa, von vom neuen Schlüssel Kn abgeleiteten Schlüsselwerten SubKn und der verwendeten Eingangs- und / oder Ausgangsmaskierung berechnet werden.

9. Verfahren nach Anspruch 8 in einer Prozessor-Einrichtung nach Anspruch 7, wobei der Wechsel des geheimen Schlüssels vom alten Schlüssel Ka zum neuen Schlüssel Kn, insbesondere das Generieren der neue Tabellen $TabS_{SubKn}$, auf Veranlassung der Applikation (Pay-App) durchgeführt wird.

10. Verfahren nach Anspruch 9, wobei die Applikation als Applikation (Pay-App) zur Durchführung einer Transaktion, insbesondere einer Zahlungsverkehrs-Transaktion, insbesondere einer Cloud-Payment-Transaktion, gestaltet ist, und wobei der Wechsel des geheimen Schlüssels von einem alten Schlüssel Ka auf einen neuen Schlüssel Kn anlässlich jedes Durchführens (TR1, TR2, ...) einer Transaktion durchgeführt wird.

11. Verfahren nach einem der Ansprüche 8 bis 10, wobei der Wechsel des geheimen Schlüssels von einem alten Schlüssel Ka (K0, K1, ...) auf einen neuen Schlüssel Kn (K1, K2, ...) nach einem Durchführen einer Transaktion (TR1, TR2, ...) mit dem alten Schlüssel Ka durchgeführt wird, so dass für die nachfolgende Transaktion (TR2, TR3, ...) die neue Tabelle $TabS_{SubKn}$ mit dem neuen Schlüssel implementiert ist.

## Claims

1. A processor device with an executable implementation of a cryptographic algorithm (AES, DES) implemented thereon, which is adapted to produce an output text from an input text, employing a secret key K, wherein the implementation of the algorithm:

- comprises a masked key-dependent computing step T' which comprises a key combination of input values derived directly or indirectly from the input text and key values SubK derived directly or indirectly from the key;
- the masked key-dependent computing step T' is represented by a table which is masked with an input masking and/or output masking to form a masked table $TabS_{SubK}$;
- the processor device comprises a key update device adapted to perform a key update method from the derived key value SubK to a new derived key value SubKneu on the masked key-dependent computing step T'; and
- wherein in the key update method key change data (SWD) are supplied to the processor device, in particular to the key update device, said key change data being computed employing the derived key value SubK, the new derived key value SubKneu and the employed input masking and/or output masking; **characterized in that:**

- in the key update method further a new masked table $TabS_{Kneu}$ is generated by means of the key change data (SWD) in the processor device, in particular in the key update device, said new masked table being adapted to newly compute the key-dependent computing step S for the new derived key value SubKneu by means of the new masked table $TabS_{Kneu}$.

2. The processor device according to claim 1, wherein the key change data (SWD) have lower memory requirements than the masked table ($TabS_K$, $TabS_{Kneu}$).

3. The processor device according to claim 1 or 2, wherein

- the algorithm comprises several rounds j = 1, ..., n,
- as the derived key value SubK a round key part of a round key kj of a round j is provided that is processed by the masked key-dependent computing step T', and
- as the new derived key value SubKneu a round key part of a round key of a different round 1, in particular of a round j+1 subsequent to the round, is provided that is processed by the masked key-dependent computing step T',

so that by means of the key change data from the masked table $TabS_K$ of the round there is derived the new masked table $TabS_{Kneu}$ of a different round, in particular the subsequent round.

4. The processor device according to claim 3, comprising a multiplicity of n, in particular 10 (AES) or 16 (DES), rounds, wherein for part of the rounds the respective new masked table $TabS_{Kneu}$ is derived employing key change data (SWD) from the respective masked table $TabS_K$ of a different round, in particular of a round preceding the round.

5. The processor device according to any one of claims 1 to 4, wherein the processor device is adapted, at runtime, while the algorithm is executed on the processor device, to supply for the computing step S two or several tables which are masked with two or several different input maskings and/ or output maskings to form masked tables $Tab1S_{SubK}$, $Tab2S_{SubK}$, $Tab3S_{SubK}$, ... , wherein the new masked table $TabS_{Kneu}$ is generated from one of the masked tables $Tab1S_{SubK}$, $Tab2S_{SubK}$, $Tab3S_{SubK}$, ....

6. The processor device according to claim 5, wherein

- the algorithm comprises several rounds, and
- at least some or all of the new masked tables $TabS_{Kneu}$ of different rounds are generated from different ones of the masked tables $Tab1S_{SubK}$, $Tab2S_{SubK}$, $Tab3S_{SubK}$,

7. The processor device according to any one of claims 1 to 6, further comprising a transaction application (Pay-App) implemented in the processor device, which is adapted to request a transaction (TR1, TR2, ...) employing the implementation of the algorithm implemented in accordance with any one of claims 1 to 6.

8. A method for changing the secret key K in a processor device according to any one of claims 1 to 7, from an old key Ka to a new key Kn,

- wherein the change of the key K from the old key Ka to the new key Kn is performed by generating new tables $TabS_{SubKn}$ for all tables provided in the implementation, referred to as old $TabS_{SubKa}$, and replacing the old tables $TabS_{SubKa}$ by the new tables $TabS_{SubKn}$,
- wherein the new tables $TabS_{SubKn}$ are generated from the old tables $TabS_{SubKa}$ by means of key change data (SWD),
- wherein the key change data (SWD) are computed employing key values SubKa derived from the old key Ka, key values SubKn derived from the new key Kn and the employed input masking and/or output masking.

9. The method according to claim 8 in a processor device according to claim 7, wherein the change of the secret key from the old key Ka to the new key Kn, in particular the generating of the new tables $TabS_{SubKn}$, is performed at the request of the application (Pay-App).

10. The method according to claim 9, wherein the application is configured as an application (Pay-App) for performing a transaction, in particular a payment transaction, in particular a cloud payment transaction, and wherein the change of the secret key from an old key Ka to a new key Kn is performed upon each performance (TR1, TR2, ...) of a transaction.

11. The method according to any one of claims 8 to 10, wherein the change of the secret key from an old key Ka (K0, K1, ...) to a new key Kn (K1, K2, ...) is performed after a performance of a transaction (TR1, TR2, ...) with the old key Ka, so that the new table $TabS_{SubKn}$ with the new key is implemented for the subsequent transaction (TR2, TR3, ...).

**Revendications**

1. Dispositif à processeur sur lequel est implémentée une implémentation exécutable d'un algorithme cryptographique (AES, DES) conçu pour, en employant une clé secrète K, générer à partir d'un texte en entrée un texte en sortie, cependant que l'implémentation de l'algorithme :

- comprend une étape de calcul T' masquée dépendant de la clé et comprenant une liaison de clé entre des valeurs d'entrée x dérivées directement ou indirectement du texte en entrée et des valeurs de clé SubK dérivées directement ou indirectement de la clé ;
- l'étape de calcul T' masquée dépendant de la clé est représentée par un tableau masqué avec un masquage d'entrée et/ou avec un masquage de sortie de manière à obtenir un tableau masqué $TabS_{SubK}$ ;
- le dispositif à processeur comprend un dispositif d'actualisation de clé conçu pour réaliser à l'étape de calcul T' masquée dépendant de la clé un procédé d'actualisation de clé de la valeur de clé SubK dérivée à une nouvelle valeur de clé dérivée SubKnouvelle ; et
- cependant que, lors du procédé d'actualisation de clé, en utilisant la valeur de clé SubK dérivée, la nouvelle valeur de clé dérivée SubKnouvelle et le masquage masquage d'entrée et/ou de sortie utilisé, des données de changement de clé (SWD) calculées sont mises à la disposition du dispositif à processeur, en particulier du dispositif d'actualisation de clé ;

**caractérisé en ce que** :

- lors du procédé d'actualisation de clé, en outre dans le dispositif à processeur, en particulier dans le dispositif d'actualisation de clé, au moyen des données de changement de clé (SWD) un nouveau tableau masqué $TabS_{Knouveau}$ est généré, lequel est conçu pour, au moyen du nouveau tableau masqué $TabS_{Knouveau}$, calculer l'étape de calcul S dépendant de la clé pour la nouvelle valeur de clé dérivée SubKnouvelle.

2. Dispositif à processeur selon la revendication 1, cependant que les données de changement de clé (SWD) nécessitent moins d'espace de stockage que le tableau masqué ($TabSK$, $TabS_{Knouveau}$).

3. Dispositif à processeur selon la revendication 1 ou 2, cependant que

- l'algorithme comprend plusieurs rondes j = 1, ..., n,
- comme valeur de clé SubK dérivée, une partie de clé de ronde d'une clé de ronde kj d'une ronde j, traitée par l'étape de calcul T' masquée dépendant de la clé, est prévue, et
- comme nouvelle valeur de clé dérivée SubKnouvelle, une partie de clé de ronde d'une clé de ronde d'une autre ronde 1, en particulier d'une ronde j+1 succédant à la ronde, traitée par l'étape de calcul T' masquée dépendant de la clé, est prévue,

de telle sorte que, au moyen des données de changement de clé, à partir du tableau masqué $TabS_K$ de la ronde, le nouveau tableau masqué $TabS_{Knouveau}$ d'une autre ronde, en particulier de la ronde suivante, est dérivé.

4. Dispositif à processeur selon la revendication 3, comprenant une pluralité de n, en particulier 10 (AES) ou 16 (DES), rondes, cependant que, pour une partie des rondes, le tableau masqué nouveau respectif $TabS_{Knouveau}$ est dérivé en utilisant des données de changement de clé (SWD) issues du tableau masqué $TabS_K$ respectif d'une autre autre ronde, en particulier d'une ronde précédant la ronde.

5. Dispositif à processeur selon une des revendications de 1 à 4, cependant que le dispositif à processeur est conçu pour, au temps d'exécution, pendant que l'algorithme est exécuté sur le dispositif à processeur, mettre à disposition pour l'étape de calcul S deux ou plusieurs tableaux masqués avec deux ou plusieurs différents masquages d'entrée et/ou masquages de sortie de manière à obtenir des tableaux masqués $Tab1S_{SubK}$, $Tab2S_{SubK}$, $Tab3S_{SubK}$, ...., cependant que le nouveau tableau masqué $TabS_{Knouveau}$ est généré à partir d'un des tableaux masqués $Tab1S_{SubK}$, $Tab2S_{SubK}$, $Tab3S_{SubK}$, ....

6. Dispositif à processeur selon la revendication 5, cependant que

- l' algorithme comporte plusieurs rondes, et
- les nouveaux tableaux masqués $TabS_{Knouveau}$ de différentes rondes sont, au moins certains ou tous, générés à partir de différents des tableaux masqués $Tab1S_{SubK}$, $Tab2S_{SubK}$, $Tab3S_{SubK}$, ....

7. Dispositif à processeur selon une des revendications de 1 à 6, comprenant en outre une application de transaction (Pay-App) implémentée dans le dispositif à processeur, laquelle est conçue pour, en utilisant l'implémentation de l'algorithme implémentée selon une des revendications de 1 à 6, déclencher une transaction (TR1, TR2, ...).

**8.** Procédé de changement de la clé secrète K dans un dispositif à processeur selon une des revendications de 1 à 7, d'une ancienne clé Ka à une nouvelle clé Kn,
cependant que le changement de la clé K de l'ancienne clé Ka à la nouvelle clé Kn est réalisé en ce que, pour tous les tableaux prévus dans l'implémentation appelés anciens $TabS_{SubKa}$, des nouveaux tableaux $TabS_{SubKn}$ sont générés, et que les anciens tableaux $TabS_{SubKa}$ sont remplacés par les nouveaux tableaux $TabS_{SubKn}$,

- cependant que les nouveaux tableaux $TabS_{SubKn}$ sont générés à partir des anciens tableaux $TabS_{SubKa}$ au moyen de données de changement de clé (SWD),
- cependant que les données de changement de clé (SWD) sont calculées en utilisant des valeurs de clé SubKa dérivées de l'ancienne clé Ka, des valeurs de clé SubKn dérivées de la nouvelle clé Kn, et le masquage d'entrée et/ou de sortie utilisé.

**9.** Procédé selon la revendication 8 dans un dispositif à processeur selon la revendication 7, cependant que le changement de la clé secrète de l'ancienne clé Ka à la nouvelle clé Kn, en particulier la génération des nouveaux tableaux $TabS_{SubKn}$, est réalisé(e) sur déclenchement par l'application (Pay-App).

**10.** Procédé selon la revendication 9, cependant que l'application est configurée comme application (Pay-App) pour la réalisation d'une transaction, en particulier d'une transaction de trafic de paiements, en particulier d'une transaction de paiement Cloud, et cependant que le changement de la clé secrète d'une ancienne clé Ka vers une nouvelle clé Kn est réalisé à l'occasion de chaque réalisation (TR1, TR2, ...) d'une transaction.

**11.** Procédé selon une des revendications de 8 à 10, cependant que le changement de la clé secrète d'une ancienne clé Ka (K0, K1, ...) vers une nouvelle clé Kn (K1, K2, ...) est réalisé après une réalisation d'une transaction (TR1, TR2, ...) avec l'ancienne clé Ka, de telle sorte que, pour la transaction suivante (TR2, TR3, ...), le nouveau tableau $TabS_{SubKn}$ est implémenté avec la nouvelle clé.

Fig. 1

Fig. 2

$$R^{j+1} = \bigoplus_{i=0}^{9} R_i^{j+1}, \quad L^{j+1} = \bigoplus_{i=0}^{9} L_i^{j+1}$$ **Fig. 3**

Multiplikation der Matrix der linearen Abbildung $A$ mit einem Datenvektor:

$$w = T'(s,y) \qquad f = A = MA \qquad (s,y) = (S(x),y)$$

Jedes $\sigma_i$ ist eine Linearkombination der $s_j$ und $y_j$:

$$\sigma_i = \sum_{j=0}^{n-1} a_{i,j} s_j + \sum_{j=0}^{m-1} a_{i,n+j} y_j$$

**Fig. 4**

Pay-App ───TR1──→ DES(K1)

K0 -> Kneu=K1

Pay-App ───TR2──→ DES(K2)

K1 -> Kneu=K2

## Fig. 5

Pay-App ───TR1──→ DES(K0)────────→

K0 -> Kneu=K1

Pay-App ───TR2──→ DES(K1)────────→

K1 -> Kneu=K2

## Fig. 6

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102014016548
- WO 102014016548 A

- WO 2010146139 A9

**In der Beschreibung aufgeführte Nicht-Patentliteratur**

- **JAMES A. MUIR.** A Tutorial on White-box AES. *Cryptology ePrint Archive, Report 2013/104*
- **J.W. BOS ; CH. HUBAIN ; W. MICHIELS ; PH. TEUWEN.** *Differential Computation Analysis: Hiding your White-Box Designs is Not Enough, eprint.iacr.org/2015/753*
- **S. CHOW ; P. EISEN ; H. JOHNSON ; P.C. VAN OORSCHOT.** A White-Box DES Implementation for DRM Applications. *pre-proceedings for ACM DRM-2002,* 15. Oktober 2002

- **JAMES A. MUIR.** A Tutorial on White-box AES. *Cryptology ePrint Archive, Report 2013/104, eprint.iacr.org/2013/104*
- **J.W. BOS ; CH. HUBAIN ; W. MICHIELS ; PH. TEUWEN.** *Differential Computation Analysis: Hiding your White-Box Designs is Not Enough,* 31. Juli 2015, eprint.iacr.org/2015/753
- **S. CHOW ; P. EISEN ; H. JOHNSON ; P.C. VAN OORSCHOT.** A White-Box DES Implementation for DRM Applications. *pre-proceedings for ACM DRM-2002,* 15. Oktober 2002, https://crypto.stanford.edu/DRM2002/whitebox.pdf